# EUROPÄISCHE PATENTANMELDUNG

(11) **EP 1 882 843 A2**
(43) Veröffentlichungstag der Anmeldung: **30.01.2008**
(21) Anmeldenummer: 07002509.3
(22) Anmeldetag: 06.02.2007
(51) Int. Cl.: F02M 25/07

(54) **Betätigungseinrichtung eines Ventils, insbesondere eines Abgasrückführventils**

(30) Priorität: 05.07.2006 DE 102006031028
(71) Anmelder: Gustav Wahler GmbH u. Co.KG, 73730 Esslingen (DE)
(72) Erfinder: Rul, Andrej, 73779 Deizisau (DE); Blank, Thomas, 71334 Waiblingen (DE)
(74) Vertreter: Kratzsch, Volkhard

(57) **Zusammenfassung**

Die Erfindung betrifft eine Betätigungseinrichtung (30) eines Ventils (10), insbesondere eines Abgasrückführventils, mit einem Antriebsmotor (31) und einem Exzenterantrieb (32) für die Hubbetätigung eines Betätigungsgliedes (20) mit Ventilglied (18) daran, wobei der Exzenterantrieb (32) ein Antriebsglied (33), das mit mindestens einer in Bezug auf eine Drehachse (34) exzentrischen Kurvenbahn (35) versehen ist, und einen der Kurvenbahn (35) folgenden Nocken (36) aufweist, der am Betätigungsglied (20) gehalten ist. Das Antriebsglied (33) ist mit einem zur Drehachse (34) konzentrischen Getriebeteil (39) versehen, mit dem ein angetriebenes Abtriebselement (40) zum Drehantrieb getrieblich in Verbindung steht (Fig. 1).

## Beschreibung

Die Erfindung bezieht sich auf eine Betätigungseinrichtung eines Ventils, insbesondere eines Abgasrückführventils, mit den Merkmalen im Oberbegriff des Anspruchs 1.

Bei einem bekannten Ventil dieser Art ist für die Betätigung des Antriebsgliedes ein Stellantrieb vorgesehen, der aus einem Drehmagneten besteht. Ein derartiger Drehmagnet weist einen relativ großen Permanentmagneten auf und ist deswegen kostenaufwändig.

Der Erfindung liegt die Aufgabe zugrunde, eine Betätigungseinrichtung der eingangs genannten Art zu schaffen, die einfach, kostengünstig, leicht und kompakt ist und die Voraussetzungen dafür schafft, statt eines kostenaufwändigen Drehmagneten als Stellantrieb einen kostengünstigeren Antriebsmotor einsetzen zu können.

Diese Aufgabe ist bei einer Betätigungseinrichtung der eingangs genannten Art gemäß der Erfindung durch die Merkmale im Anspruch 1 gelöst. Weitere vorteilhafte Erfindungsmerkmale und Ausgestaltungen ergeben sich aus den Unteransprüchen. Aufgrund des Getriebeteils, mit dem ein angetriebenes Abtriebselement zum Drehantrieb des Getriebeteils getrieblich in Verbindung steht, ist eine getriebliche Umsetzung von Drehzahl/Drehmoment an die zur Hubbetätigung des Betätigungsgliedes mit Ventilglied daran gegebenen Erfordernisse möglich, wodurch die Voraussetzungen für den Einsatz eines kostengünstigeren Antriebsmotors geschaffen sind. Aufgrund des Getriebes kann der Antriebsmotor aus einem umlaufend antreibenden Elektromotor, insbesondere Gleichstrommotor, bestehen, der wesentlich kostengünstiger als ein Drehmagnet ist.

Weitere Einzelheiten und Vorteile ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen Schnitt eines Teils eines insbesondere als Abgasrückführventil ausgebildeten Ventils in Schließstellung gemäß einem ersten Ausführungsbeispiel,
- Fig. 2: eine schematische, teilweise geschnittene Seitenansicht einer Betätigungseinrichtung des Ventils in Fig. 1 gemäß dem ersten Ausführungsbeispiel,
- Fig. 3: eine schematische Draufsicht in Pfeilrichtung III in Fig. 2 des Antriebsgliedes der Betätigungseinrichtung,
- Fig. 4: eine schematische Draufsicht etwa entsprechend derjenigen in Fig. 3 des Antriebsgliedes gemäß einem zweiten Ausführungsbeispiel.

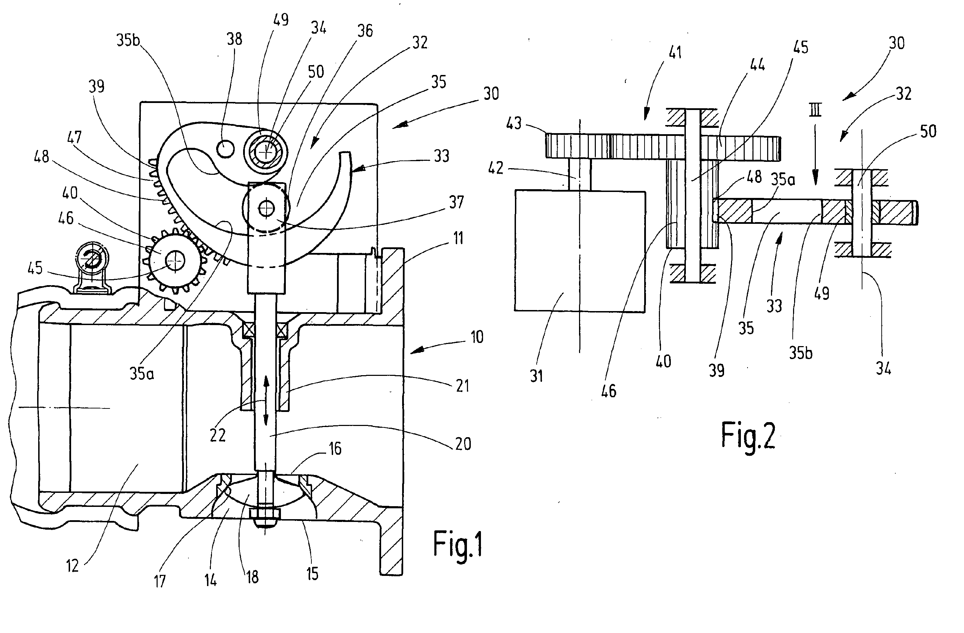

In Fig. 1 ist schematisch und stark vereinfacht ein Ventil 10 in der Ausbildung insbesondere als Abgasrückführventil gezeigt, das für eine Brennkraftmaschine bestimmt ist. Das Ventil 10 hat ein Gehäuse 11 mit innerem Frischluftkanal 12, durch den Frischluft, z.B. die Ansaugluft der Brennkraftmaschine, hindurchgeführt wird. Im Gehäuse 11 befindet sich ferner ein Abgaskanal 14, der hier z.B. quer zum Frischluftkanal 12 verläuft und auf seiner Einlassseite 15 mit einer nicht gezeigten Abgasleitung verbunden sein kann. Die Auslassseite 16 mündet in den Frischluftkanal 12. Der Abgaskanal 14 enthält zwischen der Einlassseite 15 und der Auslassseite 16 einen z.B. kegelstumpfförmigen Ventilsitz 17, der von einem Ventilglied 18 beherrscht wird. Am Ventilglied 18 greift ein Betätigungsglied 20 z.B. in Form einer Ventilstange, eines Stößels od. dgl. an, das im Gehäuse 11 mittels einer Buchse 21 verschiebbar geführt ist. Über das Betätigungsglied 20 wird das Ventilglied 18 translatorisch in Richtung des Pfeiles 22 zwischen der gezeigten Schließstellung und einer in Fig. 1 nach unten ausgestoßenen Öffnungsstellung bewegt. Hierzu dient eine Betätigungseinrichtung 30, die nachfolgend näher erläutert ist.

Die Betätigungseinrichtung 30 weist einen Antriebsmotor 31 auf, der aus einem umlaufend antreibenden Elektromotor, insbesondere Gleichstrommotor, gebildet ist. Ferner ist ein Exzenterantrieb 32 für die Hubbetätigung des Betätigungsgliedes 20 in Pfeilrichtung 22 vorgesehen. Der Exzenterantrieb 32 weist ein Antriebsglied 33, das mit mindestens einer in Bezug auf eine Drehachse 34 exzentrischen Kurvenbahn 35 versehen ist, und einen der Kurvenbahn 35 folgenden Nocken 36 auf, der am Betätigungsglied 20 gehalten ist. Der Nocken 36 ist z.B. als Rollkörper, insbesondere in Form eines Wälzlagers, ausgebildet und innerhalb einer Gabel 37 drehbar gehalten. Für die Betätigung des Ventils 10 in Schließrichtung greift der in Fig. 1 untere Teil der Kurvenbahn 35 am Nocken 36 an, wobei über diesen unteren Teil der Kurvenbahn 35 und den Nocken 36 das Betätigungsglied 20 mit Ventilglied 18 in Fig. 1 nach oben gezogen wird. Für die Betätigung in Öffnungsrichtung bei gegensinniger Drehung des Antriebsgliedes 33 um die Drehachse 34 steht der in Fig. 1 obere Teil der Kurvenbahn 35 mit dem Nocken 36 der Art in Eingriff, dass das Betätigungsglied 20 mit Ventilglied 18 in Fig. 1 nach unten in Öffnungsrichtung bewegt wird. Üblicherweise greift am Antriebsglied 33, z.B. an einer Bohrung 38 dieses, eine Failsafe-Feder an, die bei Ausfall des Antriebsmotors 31 auf das Antriebsglied 33 wirkt.

Das Antriebsglied 33 ist mit einem zur Drehachse 34 konzentrischen Getriebeteil 39 versehen, dem ein Abtriebselement 40 zu dessen Drehantrieb zugeordnet ist, das mit dem Getriebeteil 39 getrieblich in Verbindung steht. Das Abtriebselement 40 ist Teil eines Getriebes 41, auf das der Antriebsmotor 31 arbeitet. Dieses Getriebe 41 ist hier vorzugsweise als Stirnradgetriebe ausgebildet. Bei einem anderen, nicht gezeigten Ausführungsbeispiel besteht das Getriebe 41 aus einem Schneckengetriebe. Der Antriebsmotor 31 trägt auf seiner Motorwelle 42 ein Antriebszahnrad 43, z.B. ein Ritzel, das mit einem Zahnrad 44 in Eingriff steht, welches drehfest mit dem Abtriebselement 40 verbunden ist. Das Antriebszahnrad 43 und das damit kämmende Zahnrad 44 ist jeweils als Stirnrad ausgebildet. Das Abtriebselement 40 und das Zahnrad 44 sind koaxial angeordnet und beim gezeigten Ausführungsbeispiel miteinander fest verbunden und drehbar auf einem Lagerbolzen 45 gelagert, der etwa parallel zur Drehachse 34 des Antriebsgliedes 33 angeordnet ist. Statt dessen kann aber auch das Zahnrad 44 und das Abtriebselement 40 drehfest mit einer Welle verbunden sein, die ihrerseits zumindest mit einem Ende mittels eines Lagers drehbar gelagert ist.

Das Abtriebselement 40 ist als umlaufend angetriebenes, kraft- und/oder formschlüssig wirkendes Rad 46 ausgebildet, das als Zahnrad oder, wie nicht weiter gezeigt ist, auch als Reibrad od. dgl. ausgebildet sein kann.

Der Getriebeteil 39 des Antriebsgliedes 33 ist als bogenförmig verlaufende, kraft- und/oder formschlüssig wirkende Kontaktfläche 47 ausgebildet, an der das Abtriebselement 40 zum Drehantrieb getrieblich angreift. Diese Kontaktfläche 47 ist beim gezeigten Ausführungsbeispiel als Bogenverzahnung 48 ausgebildet, kann aber statt dessen bei einem anderen, nicht gezeigten Ausführungsbeispiel z.B. auch als Reibfläche gestaltet sein.

Das Antriebsglied 33 ist mittels eines Lagers 49 auf einem die Drehachse 34 vorgebenden Bolzen 50 um die Drehachse 34 drehbar gelagert. Das Lager 49 besteht z.B. aus einem Gleitlager. Nicht gezeigt ist, dass das Antriebsglied 33 im Bereich des Lagers 49 auch noch beidseitige besondere Lagerflächen aufweisen kann, soweit dies für die Halterung längs der Drehachse 34 erforderlich ist. Das Antriebsglied 33 besteht aus Metall, z.B. aus Edelstahl, und ist insbesondere als Feinstanzteil gebildet. Beim ersten Ausführungsbeispiel gemäß Fig. 1 bis 3 ist der Getriebeteil 39, insbesondere die Kontaktfläche 47, einstückiger Bestandteil des Antriebsgliedes 33.

Das Antriebsglied 33 ist als Kurvenscheibe ausgebildet, wobei die mindestens eine exzentrische Kurvenbahn 35 als etwa nutartige Innenbahn gestaltet ist, die einen in Fig. 1 unteren gekrümmten Bahnabschnitt 35a und einen in Fig. 1 oberen gekrümmten Bahnabschnitt 35b aufweist. Die zur Drehachse 34 konzentrische, bogenförmige Kontaktfläche 47 des Getriebeteils 39, insbesondere die Bogenverzahnung 48, ist bei diesem Ausführungsbeispiel auf der Außenseite des Antriebsgliedes 33 vorgesehen. Dabei verläuft diese Kontaktfläche, insbesondere Bogenverzahnung 48, konvex mit Krümmung nach außen. Bei einem anderen, nicht gezeigten Ausführungsbeispiel kann aber die Kontaktfläche 47, insbesondere Reibfläche oder Bogenverzahnung 48, statt dessen auch konkav verlaufen.

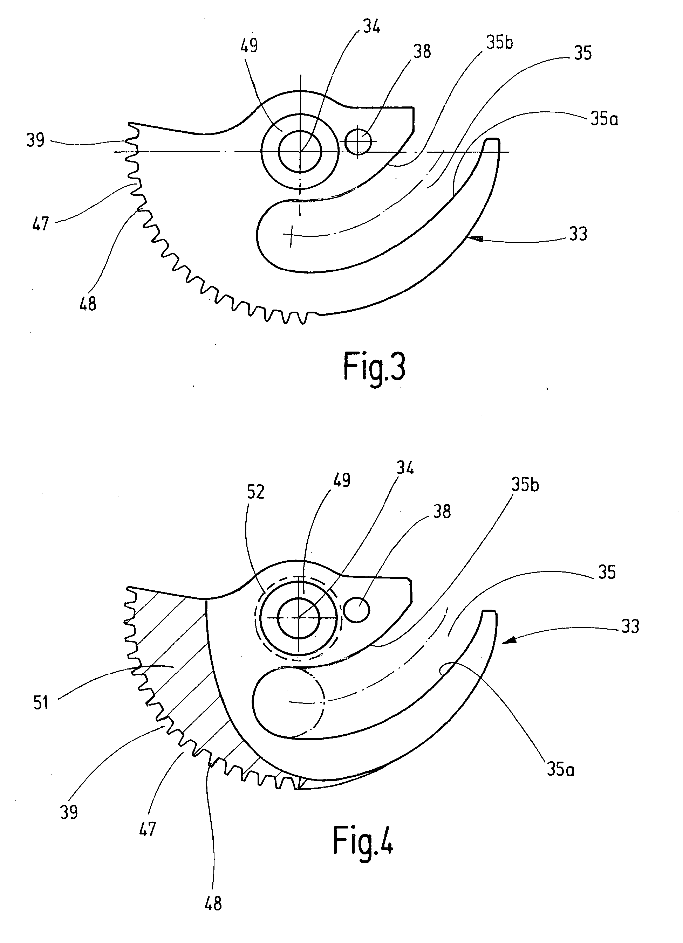

Bei dem in Fig. 4 gezeigten zweiten Ausführungsbeispiel sind für die Teile, die dem ersten Ausführungsbeispiel in Fig. 1 bis 3 entsprechen, gleiche Bezugszeichen verwendet, so dass dadurch zur Vermeidung von Wiederholungen auf die Beschreibung des ersten Ausführungsbeispieles Bezug genommen ist.

Beim zweiten Ausführungsbeispiel in Fig. 4 ist der Getriebeteil 39, insbesondere die Kontaktfläche 47, an das Antriebsglied 33 als besonderes Bauteil 51 angeformt. Dieses angeformte Bauteil 41 besteht z.B. aus Kunststoff. Vorteilhaft kann es ferner sein, wenn z.B. auch das Lager 49 des Antriebsgliedes 33 aus anderem Material, z.B. ebenfalls aus Kunststoff, gebildet ist und so, wie das Bauteil 51, am Antriebsglied 33 angespritzt ist. In Fig. 4 ist nur gestrichelt eine Befestigungsaufnahme 52 z.B. für ein Sensorelement, z.B. einen Sensormagneten, angedeutet. Auch diese Befestigungsaufnahme 52 kann aus Kunststoff bestehen und angespritzt sein. Dabei kann die Anordnung der Befestigungsaufnahme 52 auf einer Breitseite des Antriebsgliedes 33 erfolgen, während z.B. das Lager 49 einen auf der gegenüberliegenden Breitseite angeordneten Abschnitt aufweisen kann.

Die Betätigungseinrichtung 30 für das Ventil 10 ist einfach und kostengünstig. Mittels des Getriebes 41 wird das vom Antriebsmotor 31 bereitgestellte Antriebsmoment in ein für die Hubbetätigung des Betätigungsgliedes 20 mit Ventilglied 18 erforderliches größeres Moment umgewandelt. Das Getriebe 41 bietet dazu durch die Wahl der einzelnen Komponenten verschiedene Wahlmöglichkeiten. Das Antriebszahnrad 43 sowie das Zahnrad 44 und das Zahnrad 46 können aus Kunststoff gebildet sein. Diese sind damit ausreichend standfähig sowie kostengünstig und leicht und bedürfen keiner Schmierung. Der Antriebsmotor 31 in der Ausbildung als Gleichstrommotor ist leicht und kostengünstig. Er kann z.B. als permanentmagneterregter oder als elektronisch kommutierter Motor (EC-Motor) ausgebildet sein.

## Patentansprüche

1. Betätigungseinrichtung eines Ventils, insbesondere eines Abgasrückführventils, mit einem Antriebsmotor (31) und einem Exzenterantrieb (32) für die Hubbetätigung eines Betätigungsgliedes (20) mit Ventilglied (18) daran, wobei der Exzenterantrieb (32) ein Antriebsglied (33), das mit mindestens einer in Bezug auf eine Drehachse (34) exzentrischen Kurvenbahn (35) versehen ist, und einen der Kurvenbahn (35) folgenden Nocken (36) aufweist, der am Betätigungsglied (20) gehalten ist,
**dadurch gekennzeichnet,**
**dass** das Antriebsglied (33) mit einem zur Drehachse (34) konzentrischen Getriebeteil (39) versehen ist, mit dem ein angetriebenes Abtriebselement (40) zum Drehantrieb getrieblich in Verbindung steht.

2. Betätigungseinrichtung nach Anspruch 1,
**dadurch gekennzeichnet,**
**dass** das Abtriebselement (40) als umlaufend angetriebenes, kraft- und/oder formschlüssig wirkendes Rad (46) ausgebildet ist.

3. Betätigungseinrichtung nach Anspruch 2,
**dadurch gekennzeichnet,**
**dass** das Rad (46) als Reibrad ausgebildet ist.

4. Betätigungseinrichtung nach Anspruch 2,
**dadurch gekennzeichnet,**
**dass** das Rad (46) als Zahnrad ausgebildet ist.

5. Betätigungseinrichtung nach einem der Ansprüche 1 bis 4,
**dadurch gekennzeichnet,**
**dass** der Getriebeteil (39) des Antriebsgliedes (33) als bogenförmig verlaufende, kraft- und/oder formschlüssig wirkende Kontaktfläche (47) ausgebildet ist, an der das Abtriebselement (40) zum Drehantrieb getrieblich angreift.

6. Betätigungseinrichtung nach Anspruch 5,
**dadurch gekennzeichnet,**
**dass** die Kontaktfläche (47) als Reibfläche ausgebildet ist.

7. Betätigungseinrichtung nach Anspruch 5,
**dadurch gekennzeichnet,**
**dass** die Kontaktfläche (47) als Bogenverzahnung (48) ausgebildet ist.

8. Betätigungseinrichtung nach einem der Ansprüche 1 bis 7,
**dadurch gekennzeichnet,**
**dass** das Abtriebselement (40) Teil eines Getriebes (41) ist, auf das der Antriebsmotor (31) arbeitet.

9. Betätigungseinrichtung nach Anspruch 8,
**dadurch gekennzeichnet,**
**dass** das Getriebe (41) als Schneckengetriebe oder vorzugsweise als Stirnradgetriebe ausgebildet ist.

10. Betätigungseinrichtung nach einem der Ansprüche 1 bis 9,
**dadurch gekennzeichnet,**
**dass** der Antriebsmotor (31) auf der Motorwelle (42) ein Antriebszahnrad (43) trägt, das mit einem Zahnrad (44) in Eingriff steht, welches drehfest mit dem Abtriebselement (40), insbesondere Reibrad oder Zahnrad (46), verbunden ist.

11. Betätigungseinrichtung nach Anspruch 10,
**dadurch gekennzeichnet,**
**dass** das Zahnrad (44) und das Abtriebselement (40) miteinander fest verbunden und drehbar auf einem Lagerbolzen (45) gelagert sind oder drehfest mit einer Welle verbunden sind, die zumindest an einem Ende mittels eines Lagers drehbar gelagert ist.

12. Betätigungseinrichtung nach Anspruch 11,
**dadurch gekennzeichnet,**
**dass** der Lagerbolzen (45) oder die Welle etwa parallel zur Drehachse (34) des Antriebsgliedes (33) angeordnet ist.

13. Betätigungseinrichtung nach Anspruch 12,
**dadurch gekennzeichnet,**
**dass** das Antriebsglied (33) auf einem die Drehachse (34) vorgebenden Bolzen (50) um die Drehachse (34) drehbar gelagert ist.

14. Betätigungseinrichtung nach Anspruch 13,
**dadurch gekennzeichnet,**
**dass** die Lagerung des Antriebsgliedes (33) mittels eines Lagers (49), z.B. eines Gleitlagers, erfolgt.

15. Betätigungseinrichtung nach einem der Ansprüche 1 bis 14,
**dadurch gekennzeichnet,**
**dass** das Antriebsglied (33) aus Metall, z.B. Edelstahl, gebildet ist.

16. Betätigungseinrichtung nach einem der Ansprüche 1 bis 15,
**dadurch gekennzeichnet,**
**dass** der Getriebeteil (39), insbesondere die Kontaktfläche (47), an das Antriebsglied (33) angeformt ist, insbesondere damit einstückig ist.

17. Betätigungseinrichtung nach einem der Ansprüche 1 bis 16,
**dadurch gekennzeichnet,**
**dass** der Getriebeteil (39), insbesondere die Kontaktfläche (47), und/oder eine Befestigungsaufnahme (52) für ein Sensorelement und/oder das Lager (49) des Antriebsgliedes (33) aus anderem Material als das Antriebsglied (33), vorzugsweise aus Kunststoff, gebildet und mit dem Antriebsglied (33) fest verbunden sind, insbesondere bei Bildung aus Kunststoff angespritzt sind.

18. Betätigungseinrichtung nach einem der Ansprüche 1 bis 17,
**dadurch gekennzeichnet,**
**dass** das Antriebsglied (33) als Kurvenscheibe ausgebildet ist.

19. Betätigungseinrichtung nach einem der Ansprüche 1 bis 18,
**dadurch gekennzeichnet,**
**dass** die mindestens eine exzentrische Kurvenbahn (35) als etwa nutartige Innenbahn ausgebildet ist.

20. Betätigungseinrichtung nach einem der Ansprüche 1 bis 19,
**dadurch gekennzeichnet,**
**dass** die zur Drehachse (34) konzentrische, bogenförmige Kontaktfläche (47) des Getriebeteils (39), insbesondere die Reibfläche oder die Bogenverzahnung (48), auf einer Außenseite des Antriebsgliedes (33) vorgesehen ist.

21. Betätigungseinrichtung nach Anspruch 20,
**dadurch gekennzeichnet,**
**dass** die zur Drehachse (34) konzentrische, bogenförmige Kontaktfläche (47) des Getriebeteils (39), insbesondere die Reibfläche oder die Bogenverzahnung (48), konkav oder vorzugsweise konvex verläuft.

22. Betätigungseinrichtung nach einem der Ansprüche 1 bis 21,
**dadurch gekennzeichnet,**
**dass** der Nocken (36) als Rollkörper, z.B. in Form eines Wälzlagers, ausgebildet ist.

23. Betätigungseinrichtung nach einem der Ansprüche 1 bis 22,
**dadurch gekennzeichnet,**
**dass** der Antriebsmotor (31) aus einem umlaufend antreibenden Elektromotor, insbesondere Gleichstrommotor, z.B. aus einem permanentmagnetisch erregten oder elektronisch kommutierten Gleichstrommotor, gebildet ist.
